(19) Europäisches Patentamt
European Patent Office
Office européen des brevets

(11) Publication number: 0 331 052 A2

(12) EUROPEAN PATENT APPLICATION

(21) Application number: 89103321.9

(51) Int. Cl.⁴: C08F 8/30 , C08F 8/48

(22) Date of filing: 24.02.89

(30) Priority: 25.02.88 IT 1953188

(43) Date of publication of application: 06.09.89 Bulletin 89/36

(84) Designated Contracting States: AT BE CH DE ES FR GB LI NL SE

(71) Applicant: VEDRIL S.p.A.
31, Foro Buonaparte
Milan(IT)

(72) Inventor: Canova, Luciano, Dr.
7, via Marsala
I-28100 Novara(IT)
Inventor: Giannini, Umberto, Dr.
54, via Sismondi
I-20100 Milan(IT)
Inventor: Albizzati, Enrico, Dr.
64, via Roma
I-28041 Arona Novara(IT)

(74) Representative: Barz, Peter, Dr. et al
Patentanwälte Dipl.-Ing. G. Dannenberg Dr. P. Weinhold, Dr. D. Gudel Dipl.-Ing. S. Schubert, Dr. P. Barz Siegfriedstrasse 8
D-8000 München 40(DE)

# (54) Process for the preparation of imidized acrylic polymers.

(57) Preparation of imidized acrylic polymers by reacting an acrylic polymer with at least one modifier selected among those of formulae:

EP 0 331 052 A2

$R_1-NH_2$ (I)

$R_2-X-NH-R_3$ (II)

$R_4-COONH_3-R_5$ (III)

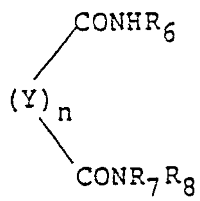

(IV)

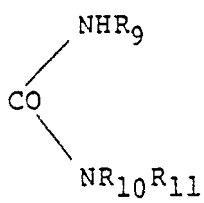

(V)

in the presence of an imidization catalyst.

# PROCESS FOR THE PREPARATION OF IMIDIZED ACRYLIC POLYMERS

The present invention relates to a process for the preparation of imidized acrylic polymers.

By the term "acrylic polymers" or "acrylic resins" as used herein, homopolymers and copolymers, and optionally mixtures thereof, of acrylic monomers such as the alkyl esters of methacrylic or acrylic acid wherein the alkyl group contains from 1 to 8 carbon atoms are meant.

Examples of esters of methacrylic or acrylic acid are: methylmethacrylate, ethyl methacrylate, isopropyl methacrylate, sec.-butyl methacrylate, tert.-butyl methacrylate, methyl, ethyl, butyl, isopropyl, acrylate, etc.

The acrylic polymers or acrylic resins may contain units derived from other monomers containing double bonds such as styrene, alpha-methylstyrene, acrylonitrile, acrylamide, etc., or from monomers having a double unsaturation, such as, for instance, butadiene.

Furthermore, these polymers have an inherent viscosity (determined in N,N′-dimethylformamide at 30 °C) between 0.01 and 7 dl/g, and preferably between 0.2 and 2 dl/g.

The main drawback shown by these polymers is that they have a rather low glass transition temperature (Tg) so that their application is significantly limited.

It is known from U.S. Patent No. 3,284,425 or from British Patent No. 926,629 to increase the Tg of these polymers by imidization obtained by reaction thereof with ammonium hydroxide, ammonium phosphate or alkyl amines, or by partial reaction of the acrylic resin itself with ammonium hydroxide followed by reaction with an alkylamine.

These processes show many drawbacks: in fact they are performed in an autoclave, they are of the discontinuous type, they require heating and reaction times generally very high, and moreover they contemplate the use of dissolution or dispersion agents.

In order to overcome these drawbacks, German Patent No. 1,077,872 suggests a process for the preparation of acrylic polymers imidized in an extruder, using ammonia in aqueous phase. However, the product thus obtained has a poor thermal stability and requires further treatments before being used.

In U.S. Patent No. 4,246,374, a process is described for preparing acrylic polymers imidized in an extruder by direct reaction of the acrylic resin with ammonia or with a primary amine, under substantially anhydrous conditions. The product thus obtained shows a good thermal stability but the conditions of the process are particularly drastic inasmuch as it is necessary to work at temperatures up to 450 °C and pressures up to 1000 atmospheres.

In accordance with the present invention, it has now been discovered that the above drawbacks may be overcome by imidizing the acrylic polymers in the presence of particular imidization catalysts.

A major object of the present invention, therefore, is to provide a process for the preparation of imidized acrylic polymers comprising reacting an acrylic polymer with at least one modifier selected from those having the formulae:

$$R_1-NH_2 \qquad (I)$$

$$R_2-X-NH-R_3 \qquad (II)$$

$$R_4-COONH_3-R_5 \qquad (III)$$

$CONHR_6$

$(Y)_n$ (IV)

$CONR_7R_8$

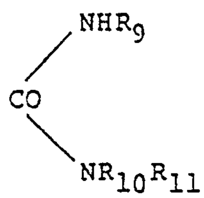

(V)

wherein

$R_1$, $R_2$, $R_3$, $R_4$, $R_5$, $R_6$, $R_7$, $R_8$, $R_9$, $R_{10}$, $R_{11}$, which may be the same or different, are hydrogen or an alkyl, cycloalkyl, aryl, alkylaryl, arylalkyl radical containing from 1 to 20 carbon atoms optionally substituted by heteroatoms;

X is a bi-functional radical selected from among -CO-, -CONH-, -OCO-$SO_2$-, and -$C_6H_4SO_2$-;

Y is selected from linear or branched alkylene radicals containing from 1 to 12 carbon atoms, cycloalkylene radicals containing from 5 to 12 carbon atoms or arylene radicals containing from 6 to 12 carbon atoms or among the corresponding heterosubstituted radicals containing heteroatoms as substituents for at least one hydrogen atom and/or inserted between at least two adjacent carbon atoms;

n is zero or 1,

in the presence of at least one imidization catalyst selected from those having the formula:

(A) $G^{t+}(Alg^{-})_t$ (VI)

wherein

G represents an organic or inorganic compound containing one or more nitrogen atoms, one of them at least positive, bound to hydrogen and/or alkyl groups and/or aryl and/or cycloalkyl and or arylalkyl and/or alkylaryl and/or alkylene and/or arylene $C_1$-$C_{30}$ groups or among the corresponding heterosubstituted groups containing heteroatoms as substituents of at least one hydrogen and/or inserted between at least two adjacent carbon atoms and/or belonging to cycloaliphatic or aromatic $C_4$-$C_{30}$ rings, in such a manner that the sum of the covalent bonds attached to the positive nitrogen atoms is four;

Alg represents a halogen, and

t is an integer between 1 and 4 and represents the number of hydrogen atoms containing a positive charge;

(B) $Z_rAB_mC_nD_pE_qF_sL_y$ (VII)

wherein

Z represents an oxygen or sulfur atom;

A is an element from the II° and VI° groups of the Periodic Table of Elements different from nitrogen and oxygen;

B represents a halogen;

C represents a mono- or di-carboxylic organic radical containing from 1 to 20 carbon atoms and optionally containing heteroatoms as substituents for at least one hydrogen and/or inserted between at least two adjacent carbon atoms;

D represents an alkoxy or arylalkoxy mono- or di-functional radical containing from 1 to 20 carbon atoms and optionally containing heteroatoms as substituents for at least one hydrogen and/or inserted between at least two carbon atoms;

E represents an alkyl, cycloalkyl, aryl, alkylaryl or arylalkyl radical containing from 1 to 20 carbon atoms;

F represents a mono-functional groups derived from β-diketones, β-ketoesters, and β-ketoaldehydes, of the formula:

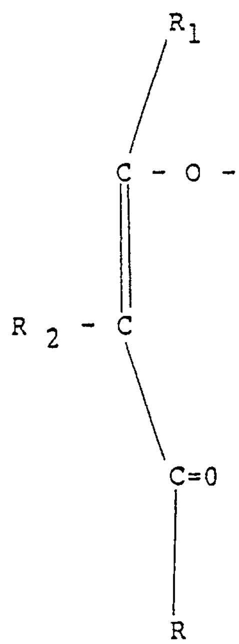

and β-ketoimines of the formula:

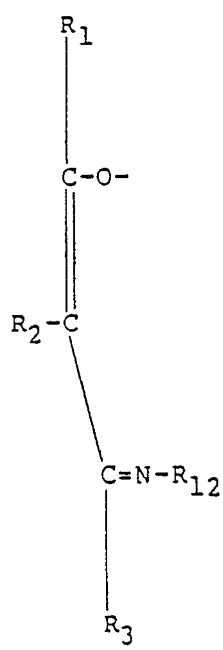

wherein

R represents a hydrogen atom or an alkyl or alkoxy radical containing from 1 to 30 carbon atoms,

$R_1$, $R_2$ and $R_3$ have the same above-mentioned meanings, and

$R_{12}$ represents an alkyl, cycloalkyl, aryl, alkylaryl, arylalkyl radical containing from 1 to 20 carbon atoms, optionally substituted by heteroatoms;

L is a Lewis base selected from among ethers and amines;

Y is an integer between 0 and $\alpha$ where $\alpha$ represents the difference between the maximum coordination number and the oxidation number of A;

r = 0,1,2

m = 0,1,2,3,4,5;

n = 0,1,2,3,4;

p = 0,1,2,3,4;

q = 0,1,2,3;

s = 0,1,2;

with the proviso that:

$2r+m+n+p+q+2s$ represents the oxidation number of A when C and D are simultaneously mono-functional or di-functional;

$2r+m+2n+p+q+2s$ represents the oxidation number of A when C and D are not simultaneously di-functional or mono-functional.

Examples of heteroatoms are nitrogen, oxygen, sulfur and halogens, etc.

Examples of modifiers of the formula (I) are: ammonia, methylamine, ethylamine, propylamine, n-butylamine, hexylamine, heptylamine, octylamine, nonylamine, decylamine,dodecylamine, hexadecylamine, octadecylamine,cyclohexylamine, phentylamine, alanine, glycine, etc.

Examples of modifiers of the formula (II) are: acetamide, anisamide, benzamide, acetanilide, butyramide, benzanilide, propionamide, formamide, N-methylacetamide, N-methylbenzamide, N-methylformamide, benzenesulfonamide, benzhydrazide, 2-chloroacetamide, 4′-chloroacetanylide, 2-chlorobenzamide, 4-chlorobenzamide, 4-chlorobenzenesulfonamide, 3-chloropropionamide, 2-chloronicotinamide, 4-chloronicotinamide, fluoroacetamide, 5-chloronicotinamide, etc.

Examples of modifiers of the formula (III) are: ammonium formate, ammonium acetate, ammonium benzoate, ammonium p-anisate, ammonium propionate, ammonium butyrate, N-methylammonium formate, N-cyclohexylammonium acetate, N-phenyl-ammonium formate, ammonium chloroacetate, ammonium p-chlorobenzoate, etc.

Examples of modifiers of the formula (IV) are: oxamide, malonamide, succinamide, adipamide, N-methyloxamide, N,N′-dimethyloxamide, N,N′-dimethylsuccinamide, N,N′-dimethylmalonamide, diamide of phthalic acid, N,N′-dicyclohexylsuccinamide, etc.

Examples of modifiers of the formula (V) are: N,N′-dimethylurea, N,N′-diphenylurea, N-methyl-N′-phenylurea, N-methyl-N,N′-diethylurea, etc.

The imidized acryl polymers obtained by the process of the present invention have a very good thermal stability, an inherent viscosity in N,N′-dimethylformamide (DMF) at 30 °C in a 0.25% by weight solution of between 0.01 and 7 dl/g, and preferably between 0.2 and 2 dl/g, and a nitrogen content between 0.1 and 9% by weight and preferably between 0.5 and 7% by weight.

More particularly, the process of the present invention comprises the reaction between the acrylic resin and at least one of the modifiers of the formula from (I) to (V), at room pressure, at a temperature above the melting temperature of the acrylic resin, for instance between 150 ° and 350 °C, and preferably between 200 ° and 300 °C, and in the presence of at least one catalyst of the formula (VI) and (VII).

Catalysts of the formula (VI) and (VII) that are particularly preferred are: ammonium chloride, ammonium bromide, ammonium iodide, phenyltrimethylammonium bromide, phenyltrimethylammonium chloride, phenyltrimethylammonium iodide, tetramethylammonium chloride, tetramethylammonium bromide, tetramethylammonium fluoride, triethylbenzylammonium chloride, tetrabutylammonium chloride, tetrabutylammonium hydrogen sulfate, tetrabutylammonium iodide, tetrabutylammonium fluoride, tetrabutylammonium bromide, tetramethylammoniumtetrafluoroborate, tetramethylammoniumhexafluorophosphate, trimethylamine hydrochloride, triethanolamine hydrochloride, 3,6-diaminoacridine hydrochloride, piperidine hydrochloride, 2-amino-4-imino-2-thiazoline hydrochloride, 4-chloropyridine hydrochloride, 2-chloro-1-methylpyridine iodide, hydrochlorides and hydrobromides of: aniline, 4-aminobenzoic acid, aminocresol, 4-amino-2,6-dichlorophenol, 2-chloroaniline, 3-chloroaniline, 1-aminoanthracene, 2-aminoanthracene, 2-aminoquinoline, 2-$\alpha$-aminobenzothiazole, 2-amino-4-chlorobenzothiazole, 3-aminopyrazole, benzimidazole, 2-acetylpyridine, 3-acetylpyridine, 2-amino-5-chloropyridine, 2-picoline, 4-picoline, 2,4-lutidine, 2,6-lutidine, 3,4-lutidine, 3,5-lutidine, dipyridinamethane, N-methylpyridine, 5-aminoindole, 2-aminopyrimidine, pyrimidine, methylamine, ethylamine, 2-chloro-ethylamine, 1-chloro-ethylamine, propylamine, butylamine, 4-bromobutylamine, 2-fluorobutylamine, sec.-butylamine, tert.-butylamine, acetaldehyde-ammonia-trimer, 4-aminobutanol, 4-aminobutyric acid, cyclohexylamine, dodecylamine, 5-aminopentanol, pyridine, benzylamine, piperazine, 1-piperazinepropanol, 4-piperazineacetophenone, furfurylamine, 3-aminocrotonamide, benzylmethylamine, 3,4-dichlorobenzylamine, N-methylbutylamine, octylamine, octadecylamine, n-nonylamine, N-phenylamine, tribenzylamine, tributylamine, tridecylamine, triethylamine, trihexylamine; zinc chloride, magnesium chloride, phosphorus pentachloride, zinc acetate, zinc stearate, boron triphenyl,aluminum trichloride, tin chloride, borontriphenoxy, zinc salicylate,zinc acetylacetonate, magnesium acetate, aluminum triiodide, aluminum tribromide, zinc chloride methoxy, zinc acetate chloride, magnesium acetate, hydroxymagnesiumchloride, zinc chloroacetate, zinc trichloroacetate, di-(2-chloroethoxy)-zinc, magnesiumethoxychloride, dichloro-boronphenoxy, phenylborondifluoride, borontrifluoride, boron trichloride, titanium tetrachloride, zinc bromide, zinc laurate, zinc oleate, zinc oxychloride, thionyl chloride, phosgene, sulfuryl chloride, copper acetate, borontriethylamine trifluoride, etc.

The modifier may be used in quantity over 5% by mols based on the acrylic monomeric unit, and preferably over 30%, and still more preferably between 50 and 600% by mols.

The catalysts may also be used in quantities up to 30% by weight, calculated on the total reaction mixture; however, quantities between 0.0001 and 2% are more commonly used.

Catalysts of the formula (VI) and (VII) may be used alone or in the presence of basic substances such as imidazole or the tertiary amines, for instances tetramethylguanidine or 4-benzylpyridine, or in the presence of acid substances such as hydrochloric acid.

According to a preferred embodiment of the present invention, the reaction between the acrylic resin and the above-mentioned modifiers may be carried out in an extruder, in a mixer, or in similar apparatus suitably equipped with degasing devices.

Furthermore, the reaction may be carried out using the acrylic resin either in the molten state or dissolved in a suitable solvent which may itself be the modifier.

Imidized acrylic polymers obtained by the process of the present invention may be processed according to the commonly used technology for the transformation of thermoplastic polymers such as for instance, extrusion, injection molding, etc. and may be used for performing manufactured articles of any shape and/or size, optionally in admixture with other thermoplastic resins.

Furthermore, these polymers may be used for preparing plates, films, pipes, filaments, etc.

Imidized acrylic polymers obtained by the process of the present invention may be mixed with suitable additives, such as for instance anti-shock agents, pigments, fibers, mineral fillers, flame retardant agents, stabilizers, lubricants, plasticizers, etc.

Furthermore, these imidized polymers may be employed with foaming agents and used in foamed form, optionally further mixed with fibers and/or inorganic fillers, to produce articles having a low density and high mechanical properties.

In order still better to understand the present invention and to practically perform the same, some illustrative but not limitative examples are given hereinafter.

## Example 1

Into a glass reactor provided with agitator and discharge for the volatile components, 7.5 g of a copolymer containing 98% by weight of methyl methacrylate and 2% by weight of methylacrylate (PMMA), having an intrinsic viscosity in DMF at 30 °C of 0,34 dl/g, 10 g of N-methylbenzamide, and 0.45 g of ammonium chloride under nitrogen are introduced. The whole is gradually heated to melting and then up to 250 °C, by distilling and removing the volatile reaction products.

The reaction is continued at 240 °C for about 3 hours and thereafter vacuum is produced by means of a mechanical pump for 15 minutes, the mixture is cooled to 150 °C, and refluxed with nitrogen. The reaction product is diluted with 50 ml of N,N′-dimethylformamide to obtain a solution from which the polymer is recovered by coagulation with methanol.

The thus-obtained product is filtered off, washed with ether and dried under vacuum.

The polymer has an inherent viscosity in DMF of 0.23 dl/g, a nitrogen content of 5.7% by weight, and a glass transition temperature (Tg) = 150 °C.

Furthermore, when the polymer is subjected to thermogravimetric analysis (TGA), measured by subjecting the sample to a temperature increase of 20 °/min., under nitrogen, it shows a weight loss of 0.45% in the temperature range between 50 ° and 300 °C.

The glass transition temperature (Tg) is determined using the differential calorimeter and is the

temperature corresponding to the flection, which appears in the thermogram when the thermal capacity of the material changes. The scanning velocity of the temperature is 20 °C/min and the measurement is carried out after a first heating up to 200 °C and subsequent cooling.

## Example 2

The work is carried out according to the procedure of Example 1, using 25 g of PMMA, 30 g of benzamide, and 1 g of ammonium chloride.

The thus-obtained polymer has an inherent viscosity in DMF of 0.26 dl/g, a nitrogen content of 6.8% by weight, and a Tg = 200 °C.

## Example 3

The work is carried out according to the procedure of Example 2, using 15 g of benzamide, and 1 g of a mixture of ammonium chloride and tetramethylguanidine with a weight ratio 1/1.

The polymer thus obtained has an inherent viscosity in DMF of 0.3 dl/g, a nitrogen content of 5.1%, and a Tg = 172 °C.

## Example 4

The operation is carried out according to the procedure of Example 1, using 25 g of a mixture containing 20 g of PMMA and 5 g of an acrylic rubber type butyl acrylatestyrene copolymer in ratios 4:1 grafted with 30% by weight on the total of a methylmethacrylate-ethyl acrylate copolymer (5% by mols of ethyl acrylate).

Furthermore, 6.2 g of N-methylacetamide and 1.5 g of ammonium chloride are added.

The polymer thus-obtained has an inherent viscosity in DMF of 0.52 dl/g, a nitrogen content of 1.3% by weight, and a Tg = 130 °C.

## Example 5

The work is carried out according to the procedure of Example 1, using 25 g of PMMA, 75 g of N-methylformamide, and 1.5 g of zinc chloride, at 200 °C.

The polymer obtained has an inherent viscosity in DMF of 0.24 dl/g, a nitrogen content of 3.4% by weight, and a Tg = 150 °C.

## Example 6

The work is carried out according to the procedure of Example 5, using 1 g of phosphorus pentachloride.

The polymer obtained has an inherent viscosity in DMF of 0.37 dl/g, a nitrogen content of 5.5% by weight, and a Tg = 150 °C.

## Example 7

The example is carried out according to the procedure of Example 5, using 1.5 g of zinc acetate.

The polymer obtained has an inherent viscosity of 0.26 dl/g, a nitrogen content of 2.7% by weight, and

a Tg = 160° C.

Example 8

The example is carried out according to the procedure of Example 1, using 25 g of PMMA, 12 g of cyclohexylamine, and 1.5 g of ammonium chloride.

The polymer obtained has a Tg = 146° C.

Example 9

The work is carried out according to the procedure of Example 1, using 70 g of ammonium benzoate and 1.5 g of ammonium chloride.

The polymer obtained has a Tg = 146° C.

Example 10

The work is carried out according to the procedure of Example 8, using 11 g of oxamide and 1.5 g of zinc chloride.

The polymer obtained has a Tg = 135° C.

Example 11

The work is carried out according to the procedure of Example 8, using 10 g of N,N′-dimethylurea and 1.5 g of zinc chloride.

The polymer obtained has a Tg = 180° C.

## Claims

1. Process for the preparation of imidized acrylic polymers comprising reacting an acrylic polymer with at least one modifier selected from those having the formulae:

$R_1-NH_2$ (I)

$R_2-X-NH-R_3$ (II)

$R_4-COONH_3-R_5$ (III)

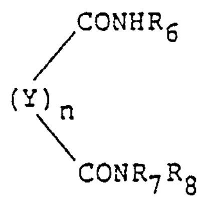

(IV)

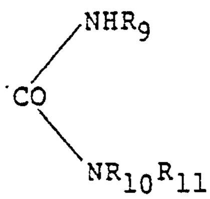

(V)

wherein

$R_1$, $R_2$, $R_3$, $R_4$, $R_5$, $R_6$, $R_7$, $R_8$, $R_9$, $R_{10}$, $R_{11}$, which may be the same or different, are hydrogen or an alkyl, cycloalkyl, aryl, arylalkyl, alkylaryl radical containing from 1 to 20 carbon atoms optionally substituted by heteroatoms;

X is a bi-functional radical selected from among: -CO-, -CONH-, -OCO-, $SO_2$-, -$C_6H_4SO_2$-;

Y is selected from linear or branched alkylene radicals containing from 1 to 12 carbon atoms, cycloalkylene radicals containing from 5 to 12 carbon atoms or arylene radicals containing from 6 to 12 carbon atoms or among the corresponding heterosubstituted radicals containing heteroatoms as substituents for at least one hydrogen and/or inserted between at least two adjacent carbon atoms:

n is zero or 1;

in the presence of at least one imidization catalyst having the formula:

(A) $G^{t+}(Alg^-)$ (VI)

wherein G is an organic or inorganic compound containing one or more nitrogen atoms, one of which at least is positively charged, bound to hydrogen and/or alkyl and/or aryl and or cycloalkyl and/or arylalkyl and/or alkylaryl and/or alkylene and/or $C_1$-$C_{30}$ arylene groups or among the corresponding heterosubstituted groups containing heteroatoms as substituents of at least one hydrogen and/or inserted between at least two adjacent carbon atoms and/or belonging to cycloaliphatic or $C_4$-$C_{30}$ aromatic rings in such a manner that the sum of the covalent bonds going to the nitrogen atom positively charged is four, Alg represents a halogen, and t is an integer between 1 and 4 and is the number of nitrogen atoms containing a positive charge:

(B) $Z_rAB_mC_nD_nE_qF_sL_y$ (VII)

wherein:

Z is an oxygen or sulfur atom;

A is an element from the II° and VI° groups of the Periodic Table of Elements different from nitrogen and oxygen;

B is a halogen;

C is a mono- or di-carboxylic organic radical containing from 1 to 20 carbon atoms and optionally containing heteroatoms as substituents for at least one hydrogen and/or inserted between at least two adjacent carbon atoms;
D is a mono- or di-functional alkoxy or arylalkoxy radical containing from 1 to 20 carbon atoms and optionally containing heteroatoms as substituents for at least one hydrogen and/or inserted between at least two carbon atoms;
E represents an alkyl, cycloalkyl, aryl, alkylaryl or arylalkyl radical containing from 1 to 20 C;
F represents a mono-functional group derived from β-diketones, β-ketoesters, and β-ketoaldehydes, of the formula:

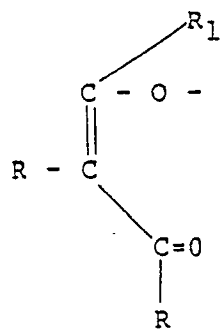

and β-ketoimines of the formula:

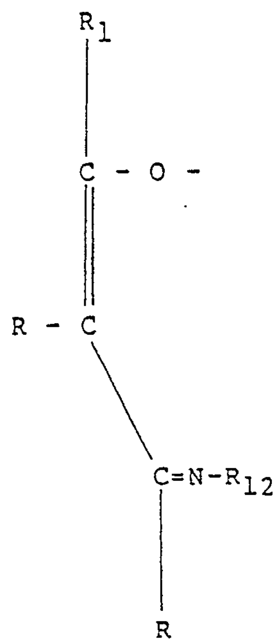

wherein
R represents a hydrogen atom or an alkyl or alkoxy radical containing from 1 to 30 carbon atoms; $R_1$, $R_2$ and $R_3$ have the same above-mentioned meanings and $R_{12}$ represents an alkyl, cycloalkyl, aryl, alkylaryl, arylalkyl radical having from 1 to 20 carbon atoms optionally substituted with heteroatoms;
L is a Lewis base selected from the class consisting of ethers and amines;
Y is an integer from among 0 and α wherein α represents the difference between the maximum coordination number and the oxidation number of A:
r = 0,1,2;
m = 0,1,2,3,4,5;
n = 0,1,2,3,4;
p = 0,1,2,3,4;
q = 0,1,2,3;
s = 0,1,2;

with the proviso that:
$2r+m+n+p+q+2s$ represents the oxidation number of A when C and D are simultaneously mono-functional or di-functional;
$2r+m+2n+p+q+2s$ represents the oxidation number of A when C and D are not simulanteously di-functional or mono-functional.

2. Process according to claim 1, wherein the heteroatoms are nitrogen, oxygen, sulfur, halogen.

3. Process according to claim 1 or 2, wherein the modifiers of the formula (I) is: ammonia, methylamine, ethylamine, propylamine, n-butylamine, hexylamine, heptylamine, octylamine, nonylamine, decylamine, dodecylamine, hexadecylamine, octadecylamine,cyclohexylamine, pentylamine, alanine, or glycine.

4. Process according to claim 1 or 2, wherein the modifier of formula (II) is: acetamide, anisamide, benzamide, acetanilide, butyramide, benzanilide, propionamide, formamide, N-methylacetamide, N-methylbenzamide, N-methylformamide, benzenesulfonamide, benzhydrazide, 2-chloroacetamide, 4′-chloroacetanilide, 2-chlorobenzamide, 4-chlorobenzamide, 4-chlorobenzenesulfonamide, 3-chloropropionamide, 2-chloronicotinamide, fluoroacetamide, 6-chloronicotinamide.

5. Process according to claim 1 or 2, wherein the modifier of formula (III) is: ammonium formate, ammonium acetate, ammonium benzoate, ammonium p-anisate, ammonium propionate, ammonium butyrate, N-methylammonium formate, N-cyclohexylammonium acetate, N-phenylammonium formate, ammonium chloroacetate, ammonium p-benzoate.

6. Process according to claim 1 or 2, wherein the modifier of formula (IV) is: oxamide, malonamide, succinamide, adipamide, N-methyloxamide, N,N′-dimethyloxamide, N,N′-dimethylsuccinamide, N,N′-dimethylmalonamide, phthalic acid diamide, or N,N′-dicychlohexylsuccinamide.

7. Process according to claim 1 or 2, wherein the modifier of the formula (V) are: N,N′-dimethylurea, N,N′-diphenylurea, N-methyl-N′-phenylurea, N-methyl-N,N′-dimethylyurea, N-N′-diethylurea, N-ethyl-N′-phenylurea, N-ethyl-N,N′-diethylurea.

8. Process according to any one of claims 1 to 7, wherein the reaction between acrylic polymer and at least one of the modifiers of the formulae from (I) to occurs at room pressure and at a temperature higher than the melting temperature of the acrylic resin.

9. Process according to claim 8, wherein the temperature is between 150° C and 350° C, and preferably between 200° and 300° C.

10. Process according to any one of claims 1 to 9, wherein the catalysts of formula (VI) and (VII) are: ammonium chloride, ammonium bromide, ammonium iodide, phenyltriethylammonium bromide, phenyltrimethylammonium chloride, phenyltrimethylammonium iodide, tetramethylammoniumchloride, tetramethylammonium bromide, tetramethylammonium fluoride, triethylbenzylammonium chloride, tetrabutylammonium hydrogen sulfate, tetrabutylammonium chloride, tetrabutylammonium iodide, tetrabutylammonium fluoride, tetrabutylammonium bromide, tetramethylammoniumtetrafluoroborate, tetramethylammoniumhexafluorophosphate, triethylamine hydrochloride, triethanolamine hydrochloride, 3,6-diaminoacridine hydrochloride, piperidine hydrochloride, 2-amino-4-imino-2-thiazoline hydrochloride, 2-chloro-1-methylpyridine iodide, hydrochlorides and hydrobromides of: aniline, 4-amino-benzoic acid, aminocresol, 4-amino-2,6-dichlorophenol-2-chloroaniline, 3-chloroaniline, 4-chloroaniline, 1-aminoanthracene,2-aminoquinoline, 2-aminobenzothiazole, 2-amino-4-chlorobenzothiazole, 3-aminopyrazole, benzimidazole, 2-acetylpyridine, 3-acetylpyridine, 2-amino-5-chloropyridine, 2-picoline, 3-picoline, 2,4-lutidine, 3,4-lutidine, 3,5-lutidine, dipyridinamethane, N-methylpyridine, 5-aminoindole, 2-aminopyridine, pyrimidine, methylamine, ethylamine, 2-chloroethylamine, 1-chloroethylamine, propylamine, butylamine, 4-bromobutylamine, 2-fluorobutylamine, sec.-butylamine, tert.-butylamine, acetaldehyde ammonia trimer, 4-aminobutanol, 4-aminobutyric acid, cyclohexylamine, dodecylamine, 5-aminopentanol, pyridine, benzylamine, piperazine, 1-piperazinepropanol, 4-piperazineacetophenone, furfurylamine, 3-aminocrotonamide, benzylmethylamine, 3,4-dichlorobenzylamine, N-methylbutylamine, octylamine, octadecylamine, n-nonylamine, N-phenylbenzylamine, tribenzylamine, tributylamine, tridecylamine, triethylamine, trihexylamine; zinc chloride, magnesium chloride, phosphorus pentachloride, zinc acetate, zinc stearate, boron triphenyl, aluminum trichloride, tin chloride, borontriphenoxy, zinc salicylate, zinc acetylacetonate, magnesium acetate, aluminum triiodide, aluminum tribromide, zinc methoxy chloride, zinc acetate chloride, magnesium acetate, hydroxymagnesium chloride, zinc chloroacetate, zinc trichloroacetate, di-(2-chloroethoxy)-zinc, magnesiumethoxy chloride, dichloroboronphenoxy, phenylborondifluoride, boron trichloride, titanium tetrachloride, zinc bromide, zinc laurate, zinc oleate, zinc oxychloride, thionyl chloride, phosgene, sulfuryl chloride, copper acetate, or boron triethylamine.

11. Process according to any one of claims 1 to 10, wherein the modifier is used in a quantity over 5% by mols, calculated on the acrylic monomeric unit, and preferably between 50 and 600%.

12. Process according to any one of claims 1 to 11, wherein the catalyst is used in a quantity up to 30% by weight, calculated on the total of the reaction mixture, and preferably between 0.0001 and 2%.

13. Process according to any one of claims 1 to 12, wherein the catalysts of the formula (VI) and (VII) are used in the presence of basic substances such as imidazole or tertiary amines, for instance tetramethylguanidine or 4-benzylpyridine, or in the presence of acidic substances such as hydrochlorid acid.

14. An imidized acrylic polymer obtainable by the process as defined in any one of claims 1 to 13.